# EUROPÄISCHE PATENTSCHRIFT

(11) **EP 1 029 513 B1**
(45) Veröffentlichungstag und Bekanntmachung des Hinweises auf die Patenterteilung: **07.09.2005**
(21) Anmeldenummer: 00103183.0
(22) Anmeldetag: 17.02.2000
(51) Int. Cl.: A61C 5/06, B05C 17/01, B65D 47/26

(54) **Misch- und Applikationskapsel**
Mixing and discharging capsule
Capsule de mélange et d'application

(30) Priorität: 19.02.1999 DE 19906887
(43) Veröffentlichungstag der Anmeldung: 23.08.2000
(73) Patentinhaber: VOCO GmbH, 27472 Cuxhaven (DE)
(72) Erfinder: Plaumann, Manfred Thomas, 27476 Cuxhaven (DE)

(56) Entgegenhaltungen:
- EP-A- 0 847 731
- DE-A- 2 324 296
- US-A- 3 658 213
- US-A- 4 209 027

## Beschreibung

Die Erfindung betrifft eine Misch- und Applikationskapsel zur Herstellung und Applikation ausdrückbarer Massen. Insbesondere zur Herstellung gebrauchsfertiger Dentalpräparate und zur Applikation des Präparates direkt an die zu behandelnde Stelle.

Misch- und Applikationsbehälter nach dem Oberbegriff des Anspruch 1 sind aus den Druckschriften DE PS 2324296 und DE 3 407 648 A1 bekannt.

DE PS 2324296 beschreibt einen Mischbehälter mit einem seitlich angebrachten Folienkissen und gerader Ausbringkanüle. Die Ausbringkanüle ist mit einem nach außen herausziehbaren Stift verschlossen. Bei Behältern bei denen die Ausbringdüse bis zum Zeitpunkt des Ausbringens durch einen Stift verschlossenen ist, besteht das Problem, daß zwar zum Ausbringen die Düse über ihre Länge konisch und im Eingangsbereich trichterförmig sein sollte, dadurch jedoch Toträume gegenüber dem Stift und der Düsenwandung entstehen, in denen sich Komponenten während der Lagerung oder des Transportes festsetzen können und anschließend nicht am Mischprozeß teilnehmen. Darüber hinaus tritt diese unvermischte Komponente beim Applizieren als erstes aus und verhindert oder beeinflußt das ordnungsgemäße Aushärten. Des weiteren kann der Stift leicht aus der Ausbringdüse entfernt werden, was zu einer Beeinträchtigung des Kapselinhaltes führen kann. Darüber hinaus fällt bei der Herausnahme des Verschlußstopfens vermeidbarer Müll an.

In der DE 3 407 648 A1 soll diesem Nachteil durch die Verschwenkbarkeit der Ausbringdüse abgeholfen werden. Nachteil dieser Ausführungsform ist jedoch die durch die Verschwenkbarkeit eingeschränkte Kanülendimensionierung. Da bei verschlossenem Zustand die Kanüle über die seitlichen Abmessungen des Kapselkörpers ragt, muß die Kapselhalterung der Anmischgeräte, wie sie beispielsweise in EP PS 291733 beschrieben sind, mit Aussparungen bzw. Durchbrüchen versehen sein, um eine sichere Kapselhalterung zu ermöglichen. Ein weiterer Nachteil der eingeschränkten Kanülendimensionierung zeigt sich in der praktischen Anwendung. Unterbricht der Anwender die Applikation, so wird häufig ein Nachlaufen des Materials aus der Kanüle beobachtet, obwohl keinerlei Druck auf den Applikationskolben ausgeübt wird.
In der Druckschrift DE OS 1586866 werden Behälter mit mehreren voneinander getrennten Kammern beschrieben, wobei mit Öffnungen versehene Innen- bzw. Außenscheiben drehbar angeordnet sind. Zur Abdichtung weisen diese Scheiben gekrümmte Formen auf, um sich nach dem Zusammenfügen gegeneinander zu pressen.

Die bekannten und beschriebenen Vorrichtungen bemühen sich zwar darum, die Applikation einer fließfähigen Substanz und deren Anmischung, bequemer zu machen, sie führen jedoch zu komplexen, teuren und schwierigen Verfahren und zu speziellen Anforderungen an die Misch- und Applikationsgeräte. Darüber hinaus ist auch die Kapselherstellung komplex und problematisch.

Der Erfindung liegt die Aufgabe zugrunde eine Misch- und Applikationskapsel bereitzustellen, die die angeführten Nachteile nicht aufweist. Des weiteren ist es die Aufgabe eine für den Anwender einfach zu bedienende Kapsel anzubieten, die beim Anmischen und Applizieren ein hohes Maß an Sicherheit, Zuverlässigkeit und Genauigkeit aufweist. Weiterhin ist es die Aufgabe eine Kapsel bereitzustellen, die kompakt und einfach herstellbar ist.
Gelöst werden die Aufgaben durch eine Kapsel gemäß dem Oberbegriff des Anspruch 1. Die erfindungsgemäße Kapsel ist in der Praxis bediensicher und anwendungsfreundlich und vermeidet die aus dem Stand der Technik bekannten Nachteile. Überraschenderweise wird durch die erfindungsgemäße Misch- und Applikationskapsel eine problemlose und einfache Herstellung, beispielsweise mittels der Kunststoffspritztechnik, eine unkomplizierte Ausgestaltung als auch eine für den Anwender sichere Lagerung und zuverlässige Anwendung erreicht. Insbesondere wird durch die Kombination der wesentlichen Kapselmerkmale, wie sie in den kennzeichnenden Teilen der Ansprüche beschrieben sind, eine Misch- und Applikationskapsel erhalten, die folgende Vorteile aufweist:
- einfache Aktivierung zum Anmischen zwei oder mehrerer Komponenten durch seitlichen Druck auf die Spange
- das Anmischen ist in gängigen Mischgeräten möglich
- die Unterbrechung des Applikationsvorganges ist ohne Umstände realisierbar, kein Nachlaufen des Materials
- es ragen keine Kapselbauteile über die Kapselkörperabmessungen, eine unbeabsichtigte Zerstörung von Kapselbauteilen oder der Kapsel wird dadurch vermieden
- der geöffnete und geschlossene Zustand der Kapsel ist einfach erkennbar und durch leichte Drehung einstellbar
- flüssigkeitsabdichtende Verschlußvorrichtungen sorgen für sichere Lagerungs- und Betätigungsbedingungen und das Verunreinigen der Mischungskomponenten wird vermieden
- die aufeinander abgestimmte Dimensionierung der Auslaßöffnungen ermöglichen das problemlose Applizieren verschieden viskoser Materialien
- die Hersteller und Anbieter anzumischender Dentalpräparate benötigen nur eine Kapselgrundkonstruktion für verschieden viskose Massen
- die Applikation mit gängigen Applikationsgeräten ist möglich
- die Applikation des fertig angemischten Präparates direkt an die zu behandelnde Stelle, z.B. in die Zahnkavität, ist ohne Umstände möglich

Gegenstand der Erfindung ist eine Kapsel für die Aufnahme, das Anmischen und die Applikation fließfähiger, d.h. ausdrückbarer Substanzen. Es handelt sich um eine Kapsel in der zwei oder mehr Komponenten in der Kapsel angemischt werden, die die fließfähige Substanz bilden, und danach direkt an die zu behandelnde Stelle ausgebracht werden können.
Im folgenden wird die Erfindung zum besseren Verständnis anhand der in den Zeichnungen 1 bis 7 dargestellten Ausführungsbeispielen näher erläutert.
- Fig. 1:: Misch- und Applikationskapsel, verschlossener Zustand
- Fig. 2:: Misch- und Applikationskapsel, geöffneter Zustand
- Fig. 3:: Misch- und Applikationskapsel im Längsschnitt
- Fig. 4:: Einzelbauteile der erfindungsgemäßen Misch- und Applikationskapsel, Rückansicht
- Fig. 5:: Einzelbauteile der erfindungsgemäßen Misch- und Applikationskapsel, Vorderansicht
- Fig. 6 a,b:: Öffnungsbereich mit Verschlußkappe und zusätzlichen Dichtelementen
- Fig. 7:: Öffnungsbereich mit Abrundungen an der Austrittsöffnung des Mischraumes

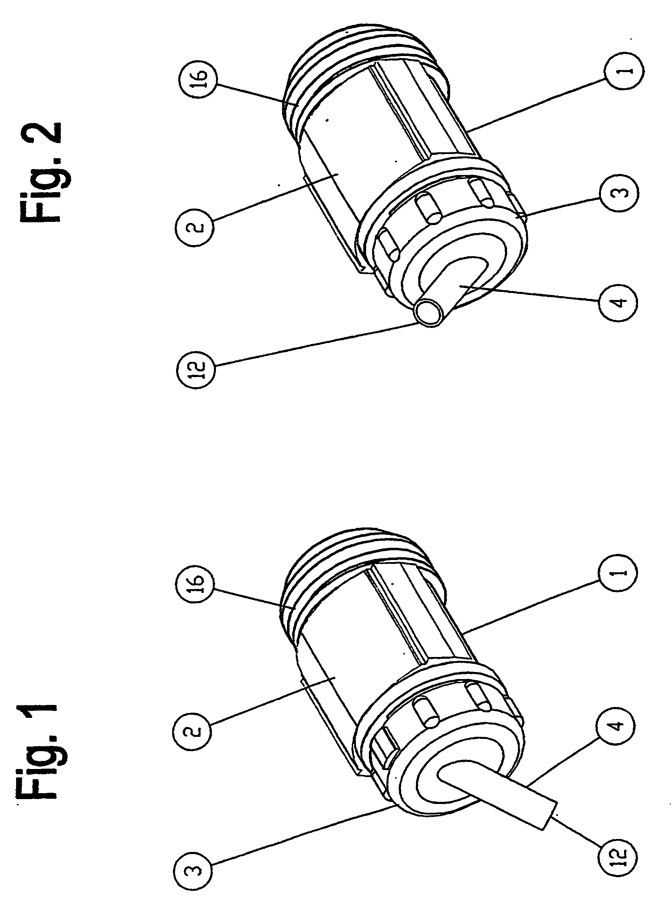

Die Fig.1 zeigt eine Ausführungsform einer einsatzbereiten Misch- und Applikationskapsel im verschlossenen Zustand in der Außenansicht. Die Fig. 2 zeigte die gleiche Kapsel im geöffneten Zustand. Die Kapsel besteht aus einem zylindrisch geformten Kapselkörper (1). Seitlich am Kapselkörper (1) befindet sich eine Spange (2) hinter der sich ein Folienkissen verbirgt, indem eine der zu mischenden Komponenten vorliegt. Durch Drehung der Verschlußkappe (3) um 180° läßt sich der geöffnete und verschlossene Zustand der Kapsel einstellen (Fig.1 zu Fig. 2). Weist die Auslaßöffnung (12) der Applikationskanüle (4) in die Richtung der Spange (2) (Fig. 2), so ist der geöffnete Zustand erkennbar. Die Applikationskanüle (4) ist bevorzugt in einem Winkel von 50°, bezogen auf die Längsachse des Kapselkörpers (1), fest an der Verschlußkappe (3) angebracht. Die Applikationskanüle (4) ist seitlich versetzt zur Mittelachse des Kapselkörpers (1) angebracht. Am hinteren Ende der Kapsel ist eine Nut (16) vorgesehen, um die Aufnahme der Kapsel in gängigen Applikationsgeräten zu gewährleisten.

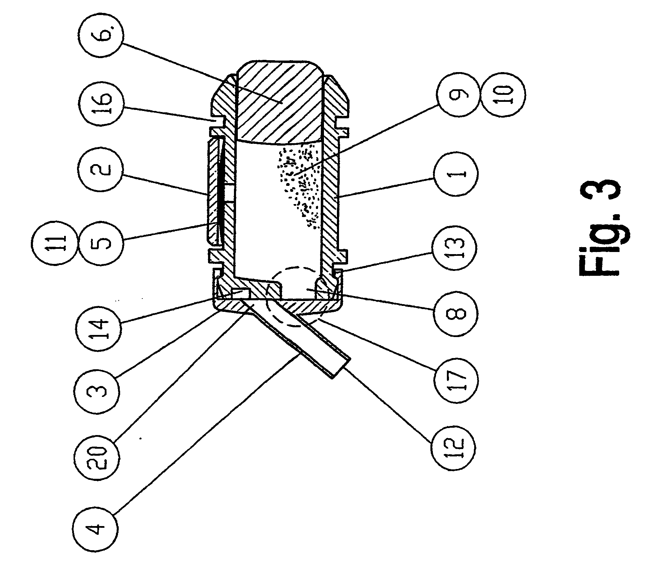

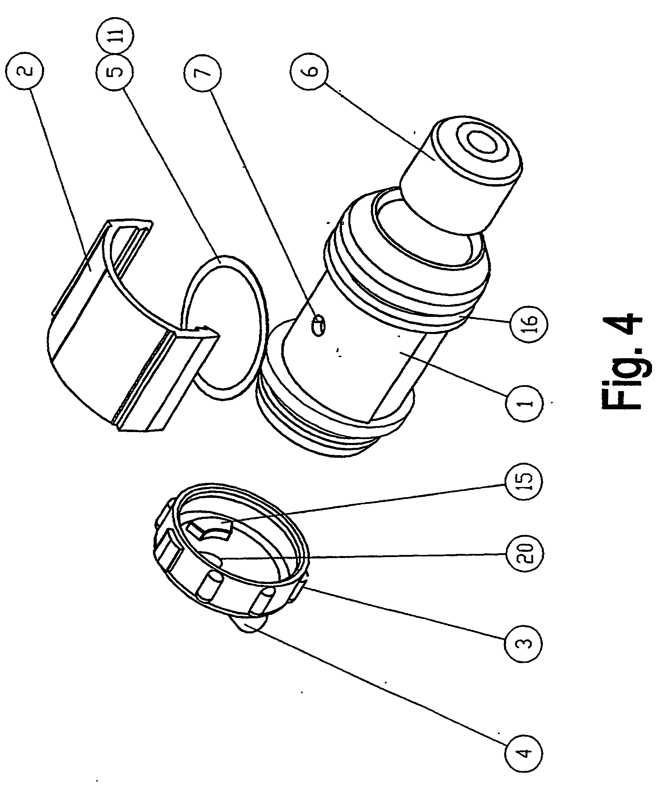

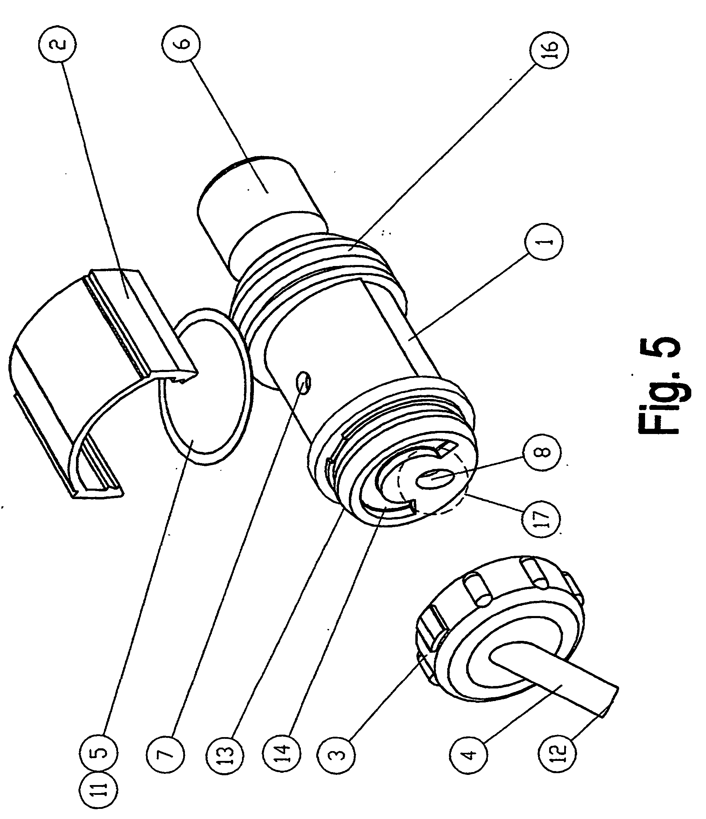

Fig. 3 verdeutlicht den Aufbau und die Einzelbauteile einer Ausführungsform der erfindungsgemäßen Misch- und Applikationskapsel im Längsschnitt.
Die Misch- und Applikationskapsel besteht aus einem zylindrisch geformten Kapselkörper (1) dessen Innenraum als Mischraum (9) genutzt wird. Im Mischraum (9) befindet sich eine oder mehrere der zu mischenden Komponenten (10). Bevorzugt liegt eine vordosierte pulverförmige Komponente (10) im Mischraum (9) vor. Insbesondere handelt es sich um dentale pulverförmige Zementbestandteile. In einem Folienkissen (5) das seitlich am Kapselkörper (1) durch eine Spange (2) gehalten wird, befindet sich eine weitere Komponente (11). Zumeist handelt es sich um eine Flüssigkeit. Bevorzugt handelt es sich um eine Flüssigkeit, die zur Aushärtung des dentalen Zementes beiträgt. Das Folienkissen (5) verschließt eine Öffnung zum Mischraum ((7) siehe Fig. 4 und Fig. 5). Durch Druck auf die Spange (2) zerplatzt das Folienkissen (5) an der Öffnung über dem Mischraum und die zu mischende Komponente aus dem Folienkissen (5) dringt über die Öffnung in den Mischraum ein. Diesen Vorgang bezeichnet man üblicherweise als Aktivierung. Zur Aktivierung werden üblicherweise gängige Aktivatorgeräte verwendet, wie sie beispielsweise in der DE GM 29817643 beschrieben sind. Am hinteren Ende der Kapsel befindet sich ein zum Auspressen des gebrauchsfertigen Dentalpräparates axial verschiebbarer Kolben (6). An der Ausbringseite des Kapselkörpers (17), dem Öffnungsbereich des Mischraumes, befindet sich eine Austrittsöffnung (8), die mit einer Verschlußkappe (3) verschlossen ist. Der Öffnungsbereich weist eine Führungsnut (14) auf, in die ein Führungsstift (15) greift, der an der Verschlußkappe (3) angebracht ist (siehe Fig. 4). An der Verschlußkappe (3) ist eine Applikationskanüle (4) angebracht, die so auf der Verschlußkappe (3) angeordnet ist, daß Austrittsöffnung des Mischraumes (8) und Einlaßbereich der Applikationskanüle (20) übereinanderpositioniert werden können. Die nicht gebogene Applikationskanüle (4) ist in einem Winkel von 10° bis 80°, bevorzugt in einem Winkel von 50°, bezogen auf die Längsachse des Kapselkörpers (1), fest an der Verschlußkappe (3) angebracht. Die Austrittsöffnung des Mischraumes (8) und die Innenkontur der Applikationskanüle im Einlaßbereich (20) ist maßlich übereinstimmend dimensioniert, damit beim Auspressen des angemischten Materials keine Materialreste zwischen Kapselkörper (1) und Verschlußkappe (3) dringen können. Bei der bevorzugten Ausführungsform der Misch- und Applikationskapsel ragt die Applikationskanüle (4) nicht über die seitlichen Abmessungen des Kapselkörpers (1) hinaus., was ein Handhabungsvorteil insbesondere beim Anmischen darstellt. Die Verschlußkappe (3) wirkt über eine Einspannvorrichtung (13) mit dem Kapselkörper im Öffnungsbereich (17) drehbar zusammen, so daß sich die Verschlußkappe (3) und der Öffnungsbereich des Kapselkörpers (17) flüssigkeitsabdichtend gegeneinanderlegen. Ein unbeabsichtigtes Eindringen von störenden Substanzen oder das unbeabsichtigte Austreten von Zementbestandteilen wird hierdurch vermieden. Weiterhin ist dadurch die sichere Lagerhaltung und einfache Handhabung der Kapseln gegeben.
Da die Viskosität der zu applizierenden Massen je nach Verarbeitungs- und/oder Anwendungserfordemis unterschiedlich sein können, kann es notwendig sein, daß die Austrittsöffnung des Mischraumes (8) und damit der Einlaßbereich der Applikationskanüle (20) verschieden dimensioniert gegenüber der Austrittsöffnung der Applikationskanüle (12) ist. D.h. die Applikationskanüle (4) ist über ihre Länge konisch und im Eingangsbereich (20) trichterförmig geformt. Eine beliebige Variation der Öffnungsweiten (12, 20) ist durch die erfindungsgemäße Ausgestaltung der Applikationskapsel gewährleistet. Damit liegt eine für alle Massen gleiche Kapselgrundkonstruktion vor. Dies erleichtert einerseits die Herstellung der Kapsel, andererseits liegen dem Anwender gleich dimensionierte Kapsel vor, obwohl die Kapseln unterschiedlich viskose Massen enthalten. Damit benötigt beispielsweise der Zahnarzt als Anwender nur noch ein und das gleiche Applikationshilfsmittel, wie z.B. eine Applikationszange, wie sie beispielsweise in der DE OS 19700213 beschrieben ist.

Fig. 4 und Fig. 5 zeigen die Einzelbauteile einer erfindungsgemäßen Ausführungsform der Misch- und Applikationskapsel von der Rück- (Fig. 4) bzw. Vorderansicht (Fig. 5). In Fig. 5 wird die Führungsnut (14) dargestellt, in die ein Führungsstift (15) (s. Fig. 4) greift, der an der Verschlußkappe (3) angebracht ist, so daß der geschlossene und der geöffnete Zustand der Kapsel durch eine auf maximal 180° begrenzte Drehung der Verschlußkappe (3) gesichert ist. Das Folienkissen (5) verschließt eine Öffnung zum Mischraum (7) und wird mittels einer Spange (2) gehalten. Alle anderen in Fig. 4 und 5 dargestellten Bauteile sind im Zusammenhang mit den Abbildungen Fig. 1 bis 3 bereits erläutert worden.

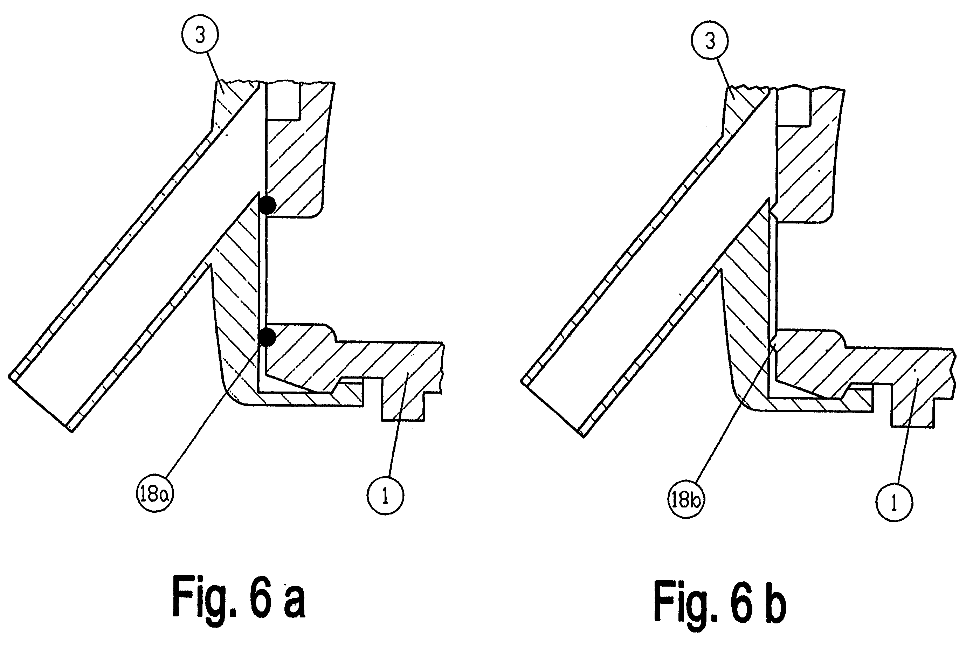

In Fig. 6a bzw. 6b ist der Öffnungsbereich einer erfindungsgemäßen Misch- und Applikationskapsel (17) mit zusätzlichen Dichtelementen (18a, 18b) dargestellt, die die Abdichtwirkung des Zusammenwirkens von Verschlußkappe (3) und Öffnungsbereich der Kapsel (17) unterstützen. Bei feuchtigkeitsempfindlichen Massen in der Kapsel ist diese abdichtende Unterstützung wesentlich für die Haltbarkeit des Materials. Fig. 6a stellt dieses Dichtelement, das Bestandteil des Kapselkörpers (1) ist, als eine Runddichtung (18a) und Fig. 6b als Wulstdichtung (18b) dar.

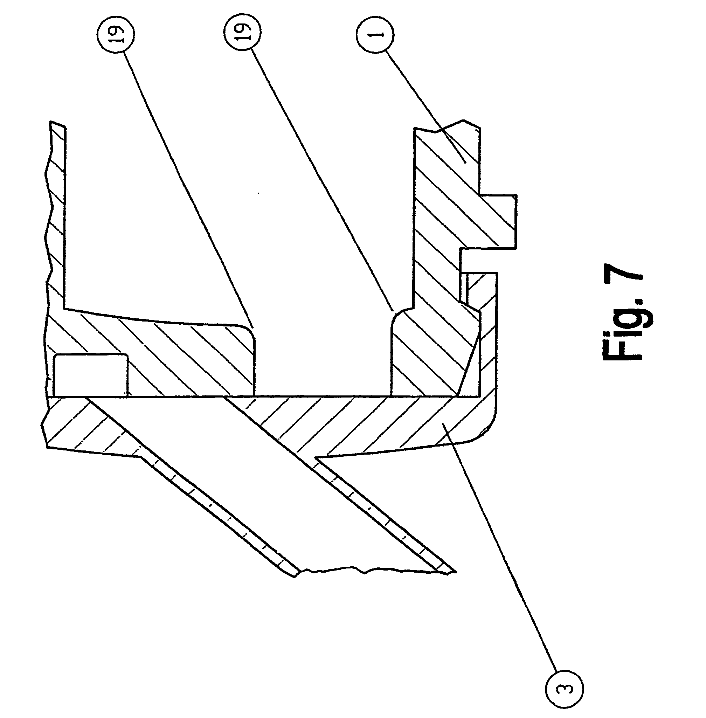

Fig. 7 zeigt Abrundungen an der Auslaßöffnung des Mischraumes (19). Diese Ausführungsform ist für die zähfließende Materialien bevorzugt, da diese Ausführungsform den Strömungswiderstand beim Auspressen herabsetzt.

### Legende der beschriebenen Kapselbauteile:

- 1: Kapselkörper
- 2: Spange
- 3: Verschlußkappe
- 4: Applikationskanüle
- 5: Folienkissen
- 6: Kolben
- 7: seitliche Öffnung
- 8: Austrittsöffnung Mischraum
- 9: Mischraum
- 10: zu mischende Komponente 1
- 11: zu mischende Komponente 2
- 12: Austrittsöffnung Applikationskanüle
- 13: Einspannvorrichtung
- 14: Führungsnut
- 15: Führungsstift
- 16: Aufnahmenut
- 17: Öffnungsbereich der Kapsel
- 18a,b: zusätzliche Dichtelemente
- 19: Abrundungen an der Austrittsöffnung (8)
- 20: Einlaßbereich der Applikationskanüle

## Patentansprüche

1. Misch- und Applikationskapsel für miteinander reagierende Massen zur Herstellung gebrauchsfertiger Dentalpräparate und zur Applikation des Präparates direkt an die zu behandelnde Stelle bestehend aus,
einem zylindrisch geformten Kapselkörper (1), einem Mischraum (9), einem zum Auspressen der gebrauchsfertigen Masse axial verschiebbaren Kolben (6), einer an der Ausbringseite des Kapselkörpers (17), dem Öffnungsbereich des Mischraumes, befindlichen Austrittsöffnung (8), einer Verschlußkappe (3) mit Einspannvorrichtung (13), die über dem Öffnungsbereich (17) angeordnet ist und an der eine Applikationskanüle (4) angebracht ist,
**dadurch gekennzeichnet, dass** eine nicht gebogene Applikationskanüle (4) in einem Winkel von 10° bis 80°, bezogen auf die Längsachse des Kapselkörpers (1), fest an der Verschlußkappe (3) angebracht ist und die Verschlußkappe (3) über die Einspannvorrichtung (13) mit dem Kapselkörper im Öffnungsbereich (17) drehbar zusammenwirkt, sodaß die Verschlußkappe (3) und der Öffnungsbereich des Kapselkörpers (17) flüssigkeitsdicht gegeneinander liegen können.

2. Misch- und Applikationskapsel nach Anspruch 1, **dadurch gekennzeichnet, dass** der Öffnungsbereich (17) der Kapsel eine Führungsnut (14) aufweist, in die ein Führungsstift (15) greift, der an der Verschlußkappe (3) angebracht ist, so dass der geschlossene und der geöffnete Zustand der Kapsel durch eine auf maximal 180° begrenzte Drehung der Verschlußkappe (3) gesichert ist.

3. Misch- und Applikationskapsel nach Anspruch 1 oder 2, **dadurch gekennzeichnet, dass** die Applikationskanüle (4) so auf der Verschlußkappe (3) angeordnet ist, dass Austrittsöffnung des Mischraumes (8) und Einlaßbereich der Applikationskanüle (20) übereinander positioniert werden können und die Austrittsöffnung des Mischraumes (8) und die Innenkontur der Applikationskanüle im Einlaßbereich (20) maßlich übereinstimmend dimensioniert sind.

4. Misch- und Applikationskapsel nach Anspruch 1 oder 2, **dadurch gekennzeichnet, dass** die Austrittsöffnung der Applikationskanüle (12) und die Austrittsöffnung des Mischraumes (8) verschieden dimensioniert sind.

5. Misch- und Applikationskapsel nach Anspruch 1 wobei
im Mischraum (9), eine der zu mischenden Komponenten (10) vorliegt, mit einem Folienkissen (5), in dem eine weitere Komponente (11) vorliegt, das seitlich am Kapselkörper (1) durch eine Spange (2) gehalten wird, wobei eine Öffnung (7), die mit dem Mischraum (9) in Verbindung steht, durch ein Teil des Folienkissens (5) verschlossen ist,
wobei
der Öffnungsbereich (17) eine Führungsnut (14) aufweist, in die ein Führungsstift (15) greift, der an der Verschlußkappe (3) angebracht ist, so dass der geschlossene und der geöffnete Zustand der Kapsel durch eine auf maximal 180° begrenzte Drehung der Verschlußkappe (3) gesichert ist,
die Applikationskanüle (4) so auf der Verschlußkappe (3) angeordnet ist, dass Austrittsöffnung des Mischraumes (8) und Einlaßbereich der Applikationskanüle (20) übereinander positioniert werden können und die Austrittsöffnung des Mischraumes (8) und die Innenkontur der Applikationskanüle im Einlaßbereich (20) maßlich übereinstimmend dimensioniert sind.

6. Misch- und Applikationskapsel nach Anspruch 1, 2, 3 oder 4 **dadurch gekennzeichnet, dass** zusätzliche Dichtungselemente (18a, 18b) die Abdichtwirkung zwischen Verschlußkappe (3) und Öffnungsbereich des Kapselkörpers (17) unterstützen.

7. Misch- und Applikationskapsel nach einem der obigen Ansprüche, **dadurch gekennzeichnet, dass** die Austrittsöffnung des Mischraumes (8) und die Innenkontur der Applikationskanüle (4) oval gestaltet ist.

8. Misch- und Applikationskapsel nach einem der obigen Ansprüche, **dadurch gekennzeichnet, dass** die Austrittsöffnung im Öffnungsbereich (8) des Kapselkörpers mit Abrundungen (19) versehen ist.

9. Misch- und Applikationskapsel nach einem der obigen Ansprüche, **dadurch gekennzeichnet, dass** die Applikationskanüle (4) nicht über die seitlichen Abmessungen des Kapselkörpers (1) hinausragt.

## Claims

1. Mixing and application capsule containing compositions reacting with one another, designed for producing ready-to-use dental products and for applying the product directly onto the area to be treated, comprising
a cylindrically shaped capsule body (1), a mixing chamber (9), an axially displaceable piston (6) for ejecting the ready-to-use composition, an outlet opening (8) located at the outlet end (17) of the capsule body, that is to say at the opening area of the mixing chamber, a closure cap (3) with clamping device (13) which is arranged over the opening area (17) and on which an application cannula (4) is mounted,
**characterized in that** an unbent application cannula (4) is mounted fixedly on the closure cap (3) at an angle of 10° to 80° relative to the longitudinal axis of the capsule body (1), and the closure cap (3) cooperates in rotation with the capsule body in the opening area (17) via the clamping device (13) so that the closure cap (3) and the opening area (17) of the capsule body can bear on one another in a liquid-tight manner.

2. Mixing and application capsule according to Claim 1, **characterized in that** the opening area (17) of the capsule has a guide groove (14) into which a guide pin (15) engages which is mounted on the closure cap (3) in such a way that the closed state and the opened state of the capsule are afforded by a rotation of the closure cap (3) limited to a maximum of 180°.

3. Mixing and application capsule according to Claim 1 or 2, **characterized in that** the application cannula (4) is arranged on the closure cap (3) in such a way that the outlet opening (8) of the mixing chamber and the inlet area (20) of the application cannula can be positioned over one another, and the outlet opening (8) of the mixing chamber and the inner contour of the application cannula in the inlet area (20) are of identical dimensions.

4. Mixing and application capsule according to Claim 1 or 2, **characterized in that** the outlet opening (12) of the application cannula and the outlet opening (8) of the mixing chamber are of different dimensions.

5. Mixing and application capsule according to Claim 1, one of the components (10) to be mixed being present in the mixing chamber (9), with a foil cushion (5) in which a further component (11) is present and which is held on the side of the capsule body (1) by a clasp (2), an opening (7) in communication with the mixing chamber (9) being closed off by part of the foil cushion (5), the opening area (17) having a guide groove (14) into which a guide pin (15) engages which is mounted on the closure cap (3) in such a way that the closed state and the opened state of the capsule are afforded by a rotation of the closure cap (3) limited to a maximum of 180°,
the application cannula (4) being arranged on the closure cap (3) in such a way that the outlet opening (8) of the mixing chamber and the inlet area (20) of the application cannula can be positioned over one another, and the outlet opening (8) of the mixing chamber and the inner contour of the application cannula in the inlet area (20) are of identical dimensions.

6. Mixing and application capsule according to Claims 1, 2, 3 or 4, **characterized in that** additional sealing elements (18a, 18b) support the sealing action between the closure cap (3) and the opening area (17) of the capsule body.

7. Mixing and application capsule according to one of the above claims, **characterized in that** the outlet opening (8) of the mixing chamber and the inner contour of the application cannula (4) are of oval configuration.

8. Mixing and application capsule according to one of the above claims, **characterized in that** the outlet opening (8) in the opening area of the capsule body is provided with rounded parts (19).

9. Mixing and application capsule according to one of the above claims, **characterized in that** the application cannula (4) does not protrude beyond the lateral dimensions of the capsule body (1).

## Revendications

1. Capsule de mélange et d'application pour des compositions réagissant les unes avec les autres en vue de la fabrication de préparations dentaires prêtes à l'emploi et en vue de l'application de la préparation directement à l'emplacement à traiter, se composant :
d'un corps de capsule (1) de forme cylindrique, d'un espace de mélange (9), d'un piston (6) déplaçable axialement pour exprimer la composition prête à l'emploi, d'une ouverture de sortie (8) se trouvant sur le côté de décharge du corps de capsule (17), la région d'ouverture de l'espace de mélange, d'un capuchon de fermeture (3) avec un dispositif de serrage (13) qui est disposé pardessus la région d'ouverture (17) et sur lequel est montée une canule d'application (4),
**caractérisée en ce qu'**une canule d'application non cintrée (4) est montée fixement sur le capuchon de fermeture (3) suivant un angle de 10° à 80° par rapport à l'axe longitudinal du corps de capsule (1) et le capuchon de fermeture (3) coopère à rotation par le biais du dispositif de serrage (13) avec le corps de capsule dans la région d'ouverture (17), de sorte que le capuchon de fermeture (3) et la région d'ouverture du corps de capsule (17) puisse s'appliquer de manière étanche aux fluides l'un contre l'autre.

2. Capsule de mélange et d'application selon la revendication 1, **caractérisée en ce que** la région d'ouverture (17) de la capsule présente une rainure de guidage (14) dans laquelle vient en prise une tige de guidage (15) qui est montée sur le capuchon de fermeture (3) de sorte que l'état fermé et ouvert de la capsule soit fixé par une rotation du capuchon de fermeture (3) limitée à 180° au maximum.

3. Capsule de mélange et d'application selon la revendication 1 ou 2, **caractérisée en ce que** la canule d'application (4) est disposée sur le capuchon de fermeture (3) de telle sorte que l'ouverture de sortie de l'espace de mélange (8) et la région d'entrée de la canule d'application (20) puissent être positionnées l'une au-dessus de l'autre et que l'ouverture de sortie de l'espace de mélange (8) et le contour interne de la canule d'application soient dimensionnés dans la région d'entrée (20) avec des dimensions correspondantes.

4. Capsule de mélange et d'application selon la revendication 1 ou 2, **caractérisée en ce que** l'ouverture de sortie de la canule d'application (12) et l'ouverture de sortie de l'espace de mélange (8) sont dimensionnées différemment.

5. Capsule de mélange et d'application selon la revendication 1, dans laquelle l'un des composants (10) à mélanger se trouve dans l'espace de mélange (9), avec un coussin en feuille (5) dans lequel se trouve un autre composant (11) qui est maintenu latéralement sur le corps de capsule (1) par une agrafe (2), une ouverture (7), qui est en liaison avec l'espace de mélange (9), étant fermée par une partie du coussin en feuille (5), la région d'ouverture (17) présentant une rainure de guidage (14) dans laquelle vient en prise une tige de guidage (15) qui est montée sur le capuchon de fermeture (3) de sorte que l'état fermé et ouvert de la capsule soit fixé par une rotation du capuchon de fermeture (3) limitée à 180° au maximum,
la canule d'application (4) étant disposée sur le capuchon de fermeture (3) de telle sorte que l'ouverture de sortie de l'espace de mélange (8) et la région d'entrée de la canule d'application (20) puissent être positionnées l'une au-dessus de l'autre et que l'ouverture de sortie de l'espace de mélange (8) et le contour interne de la canule d'application soient dimensionnés dans la région d'entrée (20) avec des dimensions correspondantes.

6. Capsule de mélange et d'application selon la revendication 1, 2, 3 ou 4, **caractérisée en ce que** des éléments d'étanchéité supplémentaires (18a, 18b) supportent l'effet d'étanchéité entre le capuchon de fermeture (3) et la région d'ouverture du corps de capsule (17).

7. Capsule de mélange et d'application selon l'une quelconque des revendications précédentes, **caractérisée en ce que** l'ouverture de sortie de l'espace de mélange (8) et le contour interne de la canule d'application (3) sont de forme ovale.

8. Capsule de mélange et d'application selon l'une quelconque des revendications précédentes, **caractérisée en ce que** l'ouverture de sortie dans la région d'ouverture (8) du corps de capsule est pourvue d'arrondis (19).

9. Capsule de mélange et d'application selon l'une quelconque des revendications précédentes, **caractérisée en ce que** la canule d'application (4) ne dépasse pas au-delà des dimensions latérales du corps de capsule (1).
